# EUROPÄISCHE PATENTSCHRIFT

(11) **EP 2 556 307 B1**
(45) Veröffentlichungstag und Bekanntmachung des Hinweises auf die Patenterteilung: **11.03.2015**
(21) Anmeldenummer: 11716816.1
(22) Anmeldetag: 30.03.2011
(51) Int. Cl.: F24J 2/52, F24J 2/04

(54) **Verwendung eines Befestigungssystems für plattenförmige Bauelelemente auf einem Steildach**
Use of a mounting system for flat components on a pitched roof
Utilisation d'un sytème de fixation pour éléments de construction plats sur un toit pentu

(30) Priorität: 08.04.2010 DE 102010014273
(43) Veröffentlichungstag der Anmeldung: 13.02.2013
(73) Patentinhaber: Benjamin Kienzler Energieberatung Ltd, 78174 Vöhrenbach (DE)
(72) Erfinder: KIENZLER, Benjamin, 78052 VS-Pfaffenweiler (DE); SCHUH, Wolfgang, 78147 Vöhrenbach-Hammeisenbach (DE)
(74) Vertreter: Patentanwälte Westphal, Mussgnug & Partner
(86) Internationale Anmeldenummer: PCT/EP2011/001576
(87) Internationale Veröffentlichungsnummer: WO 2011/124349

(56) Entgegenhaltungen:
- DE-A1- 10 240 939
- DE-A1- 19 700 873
- DE-U1-202008 009 241
- JP-A- 2005 113 430
- JP-A- 2005 240 293
- US-A- 4 216 762

## Beschreibung

Die Erfindung betrifft die Verwendung eines Befestigungssystems für flache plattenförmige Bauelemente.

Sowohl photovoltaische als auch solarthermische Kollektoren werden im Rahmen einer Nachrüstung mittels einer sogenannten Aufdach-Montage auf einem Hausdach installiert. Hierzu werden mittels Montageschienen die Kollektoren firstseitig und traufseitig fixiert und befestigt, wobei die Montageschienen über Dachhaken mit der Dachkonstruktion verbunden werden. Offenbart sind solche Befestigungssysteme z. B. in JP-2005 113 430 A, JP 2005 240 293 A, DE 102 40 939 A1 und DE 197 00 873 A1.

Bei einer Indach-Montage werden dagegen die Kollektoren in das Dach integriert, das heißt die Dachziegel werden durch die Kollektoren ersetzt.

Sowohl bei einer Aufdach- als auch einer Indach-Montage an Steildächern entspricht die Neigung der montierten Kollektoren im Wesentlichen der Dachneigung. Dies hat den Nachteil, dass auf den Kollektoren liegender Schnee leicht abrutschen kann und als Dachlawine Menschen gefährden und an Objekten Schäden anrichten können.

Aufgabe der Erfindung ist es daher, die Verwendung eines Befestigungssystems der eingangs genannten Art anzugeben, das die angeführten Nachteile vermeidet und einfach sowie kostengünstig zu realisieren ist.

Diese Aufgabe wird gelöst durch die Verwendung eines Befestigungssystems mit den Merkmalen des Patentanspruchs 1.

Gemäß der Erfindung ist das Trägerteil zum Halten benachbarter Randbereiche von zwei aneinandergereihten Bauelementen in einem Zustand mit jeweils gegenüber der Montagefläche größeren Neigungswinkel ausgebildet, so dass ein Randbereich des traufseitigen Bauelementes gegenüber dem benachbarten Randbereich des firstseitigen Bauelementes senkrecht zur Montagefläche wenigstens teilweise, vorzugsweise um die Dicke des Bauelements versetzt ist.

Damit wird erreicht, dass die jeweils in einer Reihe angeordneten photovoltaischen oder thermischen Solarkollektoren steiler stehen als das Dach, d. h. die in First-Traufe-Richtung aneinandergereihten Solarkollektoren bilden keine einheitliche Fläche, sondern weisen jeweils einen größeren Neigungswinkel als die Dachfläche bzw, die schräge Montagefläche auf. An dem dadurch entstehenden Versatz senkrecht zur Dachfläche zwischen benachbarten Randbereichen von aneinandergereihten Solarkollektoren kann sich von den Kollektorflächen abrutschender Schnee stauen, da der in Traufrichtung angrenzende Solarkollektor teilweise übersteht und dieser Überstand dadurch als Schneefänger funktioniert.

Besonders vorteilhaft ist es, dass mit nur einem einzigen erfindungsgemäßen Trägerteil gleichzeitig zwei aneinandergrenzende Solarkollektoren gehalten und auf der Montagefläche zu fixiert werden. So können mehrere Reihen solcher Solarkollektoren verbunden werden.

In einer Weiterbildung der Erfindung ist das Trägerteil mit einem Abdeckelement zur Bildung einer Schneefängerfläche derart ausgebildet, dass die Schneefängerfläche im Randbereich des einen, insbesondere des firstseitigen Bauelements einen rechten Winkel oder einen leicht stumpfen Winkel bildet. Dadurch wird der Überstand in senkrechter Richtung der Solarkollektoren vergrößert, so dass hierdurch die Schneefängerfläche vergrößert wird.

Gemäß der Erfindung ist das Trägerteil mit einer ersten Auflagefläche zur Auflage des Randbereichs des firstseitigen Bauelementes und mit einer zweiten Auflagefläche zur Auflage des Randbereichs des traufseitigen Bauelementes ausgebildet, wobei zur Bildung des Versatzes der benachbarten Randbereiche der senkrechte Abstand der ersten Auflagefläche zur Montagefläche kleiner ist als der senkrechte Abstand zwischen der zweiten Auflagefläche und der Montagefläche. Damit können in konstruktiver einfacher Weise die Abstände zur Erzielung des gewünschten Neigungswinkels der einzelnen Solarkollektoren eingestellt werden. Der Abstand zwischen der ersten und zweiten Auflagefläche des Trägerteils bestimmt damit den Versatz zwischen den Randbereichen der benachbarten Bauelemente.

Gemäß einer weiteren vorteilhaften Weiterbildung der Erfindung ist das Trägerteil mit einer im Wesentlichen senkrecht zur Montagefläche und quer zur in Firstrichtung sich erstreckenden Wandelement ausgebildet, wobei die erste und zweite Auflagefläche auf gegenüberliegenden Seiten des Wandelementes ausgebildet sind. Das führt zu einem einfachen konstruktiven Aufbau des Trägerteils.

Die Dichtheit gegenüber Feuchtigkeit und Schmutz wird bei einer weiteren vorteilhaften Weiterbildung der Erfindung dadurch erreicht, dass das Trägerteil im Bereich der ersten Auflagefläche U-förmig zum randseitigen Umschließen des firstseitigen Randbereichs des Bauelementes und auch in entsprechender Weise im Bereich der zweiten Auflagefläche U-förmig zum randseitigen Umschließen des traufseitigen Randbereichs des Bauelementes profiliert ist.

Eine besonders vorteilhafte Ausgestaltung ergibt sich gemäß einer Weiterbildung der Erfindung, bei der das Trägerteil ein Heizelement aufweist, das im Randbereich des traufseitigen Bauelementes angeordnet ist, der gegenüber dem benachbarten Randbereich des firstseitigen Bauelements versetzt ist, insbesondere im Bereich der Schneefängerfläche, wodurch der dort aufgefangene Schnee abgeschmolzen werden kann, damit wieder die maximal wirksame Kollektorfläche aktiv werden kann.

Bei solarthermischen Kollektoren bietet es sich an, Heizschlangen als Heizelement zu verwenden, die von dem Wärmeträger durchflossen werden. Werden photovoltaische Kollektoren verwendet, kann eine elektrische Heizung als Heizelement eingesetzt werden, die von dem Strom versorgt wird, die die Kollektoren erzeugen.

Ferner wird gemäß einer weiteren vorteilhaften Ausgestaltung der Erfindung das Trägerteil an einem das traufseitige Bauelement überragenden Bereich mit einem Sprinklerelement, insbesondere ein Leitungsrohr zur Aufnahme einer Sprinklerflüssigkeit versehen. Damit können die Kollektoren mit der Sprinklerflüssigkeit berieselt werden, um bspw. deren Oberfläche zu reinigen. Mit einer erwärmten Sprinklerflüssigkeit können auch die mit Schnee und/oder Eis bedeckten Kollektoren wieder freigelegt werden. Dazu kann bei Einsatz von solarthermischen Kollektoren die Sprinklerflüssigkeit über einen Wärmetauscher mit der Wärmeenergie aus dem Wärmeträger erwärmt werden. Auch ist es möglich, die von photovoltaischen Kollektoren erzeugte Energie direkt zur Erwärmung der Sprinklerflüssigkeit zu verwenden.

Schließlich wird gemäß einer letzten vorteilhaften Weiterbildung das Trägerteil als Hohlprofilschiene ausgebildet, so dass es kostengünstig als Strangpressprofil aus Aluminium herstellbar ist.

Die Erfindung wird nachstehend anhand eines Ausführungsbeispiels unter Bezugnahme auf die beigefügten Figuren ausführlich beschrieben. Es zeigen:
- Figur 1: eine schematische Schnittdarstellung eines Steildaches mit einem Ausführungsbeispiel des Befestigungssystems zur Montage von photovoltaischen oder solarthermischen Kollektoren,
- Figur 2,: eine schematische Schnittdarstellung eines Details des Befestigungssystems im Bereich eines Trägerteils, und
- Figur 3: eine schematische Schnittdarstellung eines weiteren Ausführungsbeispiels eines Trägerteils.
einem Ausführungsbeispiel

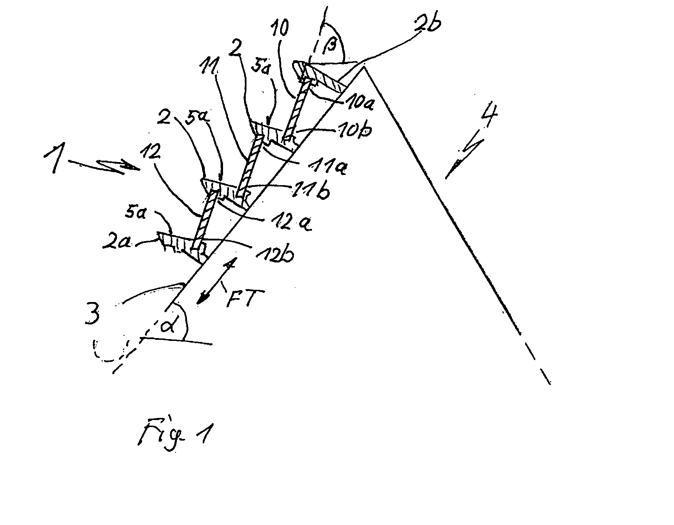

Figur 1 zeigt ein schematisch dargestelltes Steildach 4 mit einer als Montagefläche 3 dienenden Dachfläche, die bspw. mit Dachziegel belegt ist.

Auf dieser Montagefläche 3 ist ein Befestigungssystem 1 mit in First-Traufe-Richtung FT aneinandergereihten photovoltaischen oder solarthermischen Kollektoren 10, 11 und 12, im Folgenden Solarkollektoren genannt, und Trägerteilen 2, 2a und 2b dargestellt. Diese Trägerteile 2, 2a und 2b erstrecken sich in Firstrichtung und sind in First-Traufe-Richtung FT parallel beabstandet auf der Montagefläche 3 montiert. Jeweils zwischen benachbarten Trägerteilen 2a, 2 und 2b werden in Firstrichtung angeordnete mehrere solcher Solarkollektoren 10, 11 bzw. 12 gehalten und bilden somit drei Reihen von Solarkollektoren.

Die Solarkollektoren 11 der mittleren Reihe werden zwischen zwei identisch aufgebauten Trägerteilen 2 an jeweils ihren Randbereichen 11a und 11b bzw. 12a und 12b gehalten, die in den nachfolgenden Figuren im Detail erläutert werden. Die firstseitige Reihe der Solarkollektoren 10 werden zur Bildung eines Abschlusses an ihrem firstseitigen Randbereich 10a von einem Trägerteil 2b gehalten, während der traufseitige Abschluss des Befestigungssystems 1 von einem Trägerteil 2a gebildet wird, das zum Halten des traufseitigen Randbereiches 12b der in der untersten Reihe angeordneten Solarkollektoren 12 dient. Dieses Trägerteil 2a kann wie ein Trägerteil 2 ausgebildet oder auch entsprechend seiner Funktion als Abschlussteil ausgebildet sein. Entsprechendes gilt auch für das Trägerteil 2b.

Die Trägerteile 2, 2a und 2b sind so ausgebildet, dass die Solarkollektoren 10, 11 und 12 in einem Neigungswinkel β gehalten werden, der größer ist als der Neigungswinkel α der Dachflächen des Steildaches 4 bzw. der Montagefläche 3. Hierzu sind die Trägerteile 2 als Konsole ausgebildet, so dass sie aneinandergrenzende Randbereiche 10b und 11a der benachbarten Solarkollektoren 10 und 11 bzw. aneinandergrenzende Randbereiche 11b und 12a der benachbarten Solarkollektoren 11 und 12 halten. Dabei wird der Randbereich 11a bzw. 12a des Solarkollektors 10 bzw. 11 gegenüber dem benachbarten Randbereich 10b bzw. 11b des Solarkollektors 10 bzw. 11 senkrecht zur Montagefläche Solarkollektors versetzt angeordnet, so dass hierdurch die Trägerteile 2 eine Schneefängerfläche 5a ausbilden, die in Traufrichtung senkrecht oder leicht geneigt auf der Oberfläche der Solarkollektoren 10 bzw. 11 steht. Auch das den traufseitigen Abschluss bildende Trägerteil 2a ist mit einer solchen Schneefängerfläche 5a ausgebildet. Mit diesen Schneefängerflächen 5a wird auf den Solarkollektoren 10, 11 und 12 abrutschender Schnee aufgefangen, so dass hierdurch die Entstehung von Dachlawinen verhindert wird.

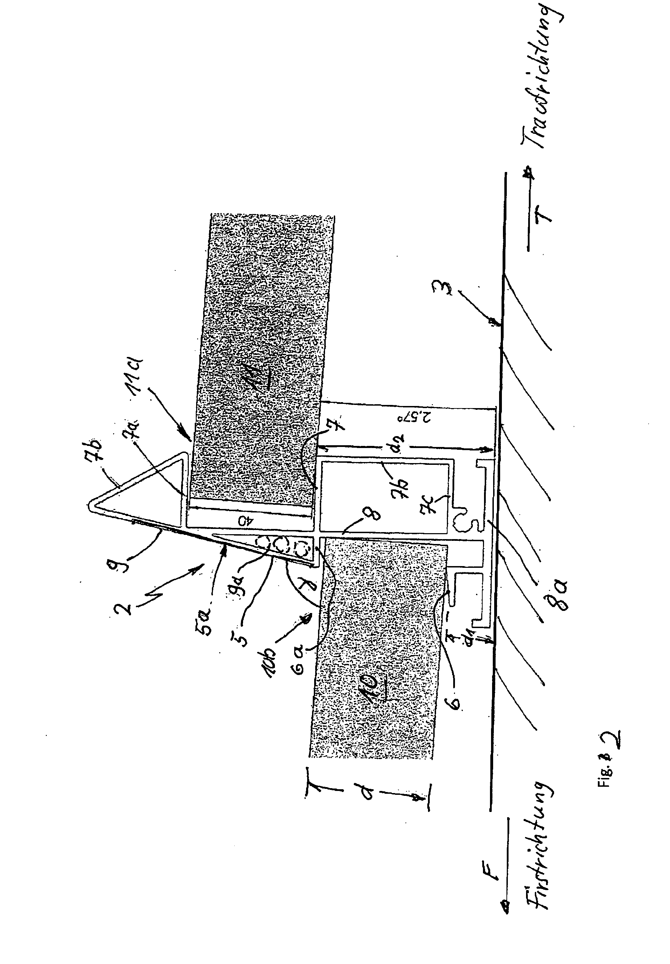

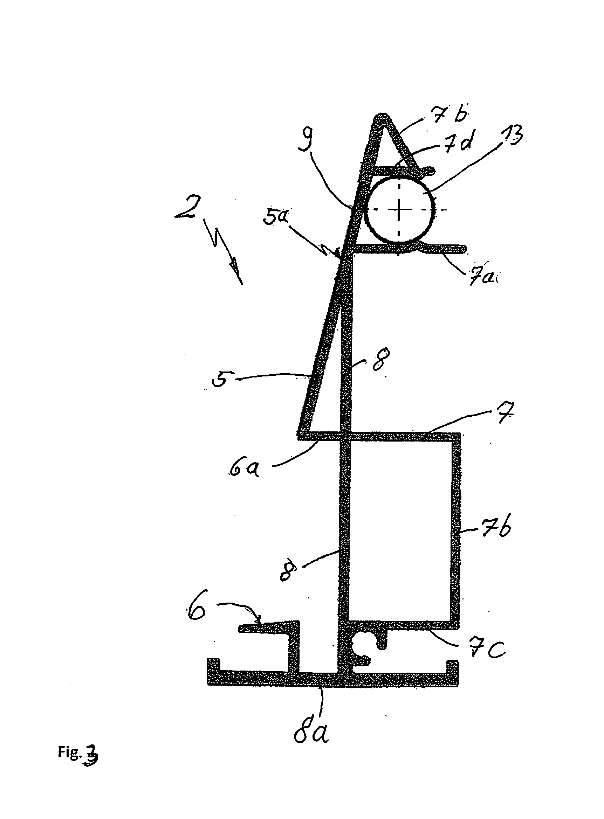

Im Folgenden wird der Aufbau der Trägerteile 2 im Detail anhand der Figuren 2 und 3 beschrieben.

Die Figur 2 zeigt nur ein einziges auf der Montagefläche 3 angeordnetes Trägerteil 2 mit den von diesem Trägerteil 2 zu haltenden Randbereichen 10b und 11a der Solarkollektoren 10 und 11, wobei bezüglich des Trägerteils 2 der Solarkollektor 10 sich in Firstrichtung F und der Solarkollektor 11 in Traufrichtung T erstreckt.

Das Trägerteil 2 umfasst ein im Wesentlichen senkrecht auf der Montagefläche 3 stehendes Wandelement 8, das über ein Fußelement 8a auf der Montagefläche 3 montiert wird. Firstseitig hinsichtlich des Wandelementes 8 ist an das Fußelement 8a eine erste Auflagefläche 6 für den Randbereich 10b des firstseitigen Solarkollektors 10 und traufseitig direkt an das Wandelement 8 eine zweite Auflagefläche 7 für den Randbereich 11a des traufseitigen Solarkollektors 11 angeformt. Der Randbereich 11b des Solarkollektors 11 wird von dem in Traufrichtung T benachbarten Trägerteil 2 (nicht dargestellt) mittels der ersten Auflagefläche 6 gehalten. Der Abstand a₁ der ersten Auflagefläche 6 ist kleiner als der Abstand a₂ der zweiten Auflagefläche 7, so dass hierdurch der die Neigung gegenüber der Ebene der Montagefläche 3 bestimmende Versatz zwischen den benachbarten Randbereichen 10b und 11a entsteht. Dieser Versatz als Differenz der beiden Abstände a₁ und a₂ entspricht gemäß Figur 2 ungefähr der Dicke d der Solarkollektoren, bspw. 40 mm und führt zu einem Neigungswinkel gegenüber der Montagefläche von ca. 2, 57°.

Der Randbereich 10b des Solarkollektors 10 wird von dem Trägerteil 2 U-förmig umfasst, wobei diese U-Form von dem über den Solarkollektor 10 hinaus sich erstreckenden Wandelement 8 zusammen mit der ersten Auflagefläche 6 und einem hierzu parallelen Wandelement 6a gebildet wird. Vom Rand dieses Wandelementes 6a erstreckt sich ein die Schneefängerfläche 5a bildendes Abdeckelement 5 über das Ende des Wandelementes 8. Dieses Abdeckteil 5 bildet mit der Oberfläche des Solarkollektors 10 einen leicht stumpfen Winkel γ. In dieser U-Form kann der Randbereich 10b formschlüssig mit einem geeigneten Material eingebettet werden.

Der Randbereich 11a des Solarkollektors 11 wird von dem Trägerteil 2 ebenfalls U-förmig eingefasst, wobei diese U-Form von der zweiten Auflagefläche 7 zusammen mit dem stirnseitig des Solarkollektors 11 verlaufenden Wandelement 8 und einem parallel zur Auflagefläche 7 am Ende des Wandelements 8 angeformten Wandelement 7a gebildet wird. Die Enden des Wandelements 7a und des Wandelements 8 werden mit einem weiteren Wandelement 7b verbunden, so dass ein dreiecksförmiger Querschnitt entsteht. Auch dieser Randbereich 11a des Solarkollektors 11 wird formschlüssig in diese U-Form eingebettet.

Die Auflagefläche 7 bildet in Richtung des Fußelements 8a zusammen mit dem Wandelement 8 und mit weiteren Wandelementen 7b und 7c einen rechteckförmigen Querschnitt.

Das Trägerteil 2 ist als Aluminium-Hohlprofil hergestellt.

Auf der Schneefängerfläche 5a kann in Form eines Heizbandes ein elektrisches Heizelement 9 integriert werden, um den von dieser Schneefängerfläche 5a aufgefangenen Schnee abzuschmelzen. Sind die Solarkollektoren 10 und 11 als photovoltaische Elemente ausgebildet, wird die hierzu erforderliche elektrische Energie von diesen erzeugt und geliefert.

Bei einem Einsatz von solarthermischen Elementen als Solarkollektoren kann alternativ ein solches Heizelement auch durch Heizschlangen 9a gebildet werden, die in dem Zwischenraum zwischen dem Abdeckelement 5 und dem Wandelement 8 angeordnet werden können. Diese Heizschlangen werden in den Wärmekreislauf dieser solarthermischen Elemente integriert und von dem Wärmeträger durchflossen.

Figur 3 zeigt ein weiteres Trägerteil 2 in einer Querschnittsdarstellung, das bis auf ein rohrförmiges Sprinklerelement 13 identisch mit dem Trägerteil 2 aus Figur 2 ausgebildet ist. Dieses Sprinklerelement 13 ist zwischen dem Wandelement 7a, dem Abdeckelement 5 und einem weiteren parallel zum Wandelement 7a an das Wandelement 8 angeformten Wandelement 7d mittels in dem Wandelement 7a und dem Wandelement 7d eingeprägten Sicken so gehalten, dass ein von dem Trägerteil 2 über dessen Randbereich 11a gehaltener Solarkollektor 11 (nicht dargestellt) von einer Sprinklerflüssigkeit benetzt wird, um bspw. dessen Oberfläche zu reinigen. Mit einer erwärmten Sprinklerflüssigkeit können auch die mit Schnee und/oder Eis bedeckten Solarkollektoren wieder freigelegt werden. Dazu kann bei Einsatz von solarthermischen Elementen die Sprinklerflüssigkeit über einen Wärmetauscher mit der Wärmeenergie aus dem Wärmeträger erwärmt werden. Auch ist es möglich, die von photovoltaischen Elementen erzeugte Energie direkt zur Erwärmung der Sprinklerflüssigkeit zu verwenden.

### Bezugszeichenliste

- 1: Befestigungssystem
- 2: Trägerteil
- 2a: Trägerteil als traufseitiger Abschluss des Befestigungssystems 1
- 2b: Trägerteil als firstseitiger Abschluss des Befestigungssystems 1
- 3: Montagefläche, Dachfläche
- 4: Steildach
- 5: Abdeckelement
- 5a: Schneefängerfläche des Abdeckelements 5
- 6: erste Auflagefläche
- 6a: Wandelement
- 7: zweite Auflagefläche
- 7a: Wandelement
- 7b: Wandelement
- 7c: Wandelement
- 7d: Wandelement
- 8: Wandelement
- 8a: Fußelement
- 9: Heizelement
- 9a: Heizschlangen

- 10: Solarkollektor
- 10a: Randbereich des Solarkollektors 10
- 10b: Randbereich des Solarkollektors 10
- 11: Solarkollektor
- 11a: Randbereich des Solarkollektors 11
- 11b: Randbereich des Solarkollektors 11
- 12: Solarkollektor
- 12a: Randbereich des Solarkollektors 12
- 12b: Randbereich des Solarkollektors 12
- 13: Sprinklerelement

## Patentansprüche

1. Verwendung eines Befestigungssystems (1) für flache plattenförmige Bauelemente (10, 11, 12), mit Trägerteilen (2) zum Befestigen der plattenförmigen Bauelemente (10, 11, 12) auf einem Steildach (4) mit einer Montagefläche (3), wobei wenigstens zwei in First-Traufe-Richtung aneinandergereihte Bauelemente (10, 11, 12) von mehreren auf der Montagefläche (3) befestigten Trägerteilen (2) gehalten werden,
wobei
die Trägerteile (2) mit einer ersten Auflagefläche (6) und einer zweiten Auflagefläche (7) ausgebildet sind und zum Halten benachbarter Randbereiche (10b, 11a; 11b, 12a) von zwei in First-Traufe-Richtung (FT) aneinandergereihten Bauelementen (10, 11, 12) in einem Zustand mit jeweils gegenüber dem Neigungswinkel (α) der Montagefläche (3) größeren Neigungswinkel (β) auf der Montagefläche (3) montiert sind, so dass - senkrecht zur Montagefläche (3) gesehen - ein Randbereich (11a, 12a) des traufseitigen Bauelementes (11, 12) auf der zweiten Auflagefläche (7) aufsitzt und gegenüber dem benachbarten Randbereich (10b, 11b) des firstseitigen Bauelementes (10, 11), das auf der ersten Auflagefläche (6) aufsitzt, weiter von der Montagefläche (3) weg versetzt ist, wobei die benachbarten Randbereiche von zwei aneinandergereihten Bauelementen (10, 11, 12 überlappungsfrei angeordnet sind.

2. Verwendung nach Anspruch 1,
**dadurch gekennzeichnet, dass**
die Trägerteile (2) mit einem Abdeckelement (5) zur Bildung einer Schneefängerfläche (5a) derart ausgebildet sind, dass die Schneefängerfläche (5a) im Randbereich (10b, 11b, 12b) des firstseitigen Bauelements (10, 11, 12) einen rechten Winkel oder einen leicht stumpfen Winkel (γ) bildet.

3. Verwendung nach Anspruch 1 oder 2,
**dadurch gekennzeichnet, dass**
die erste Auflagefläche (6) zur Auflage des Randbereichs (10b, 11b, 12b) des firstseitigen Bauelementes (10, 11, 12) und die zweite Auflagefläche (7) zur Auflage des Randbereichs (11a, 12a) des traufseitigen Bauelementes (11, 12) dient, wobei zur Bildung des Versatzes der benachbarten Randbereiche (10b, 11a; 11b, 12a) der senkrechte Abstand (a₁) der ersten Auflagefläche (6) zur Montagefläche (3) kleiner ist als der senkrechte Abstand (a₂) zwischen der zweiten Auflagefläche (7) und der Montagefläche (3).

4. Verwendung nach Anspruch 3,
**dadurch gekennzeichnet, dass**
die Trägerteile (2) mit einer im Wesentlichen senkrecht zur Montagefläche (3) und quer zur Firstrichtung sich erstreckenden Wandelement (8) ausgebildet sind und die erste und zweite Auflagefläche (6, 7) auf gegenüberliegenden Seiten des Wandelementes (8) ausgebildet sind.

5. Verwendung nach einem der Ansprüche 3 oder 4,
**dadurch gekennzeichnet, dass**
die Trägerteile (2) im Bereich der ersten Auflagefläche (6) U-förmig zum randseitigen Umschließen des firstseitigen Randbereichs (10b, 11b, 12b) des Bauelementes (10, 11, 12) profiliert sind.

6. Verwendung nach einem der Ansprüche 3 bis 5,
**dadurch gekennzeichnet, dass**
die Trägerteile (2) im Bereich der zweiten Auflagefläche (7) U-förmig zum randseitigen Umschließen des traufseitigen Randbereichs (11a, 12a) des Bauelementes (11, 12) profiliert sind.

7. Verwendung nach einem der vorhergehenden Ansprüche,
**dadurch gekennzeichnet, dass**
die Trägerteile (2) ein Heizelement (9) aufweisen das im Bereich der Schneefängerfläche (5a) angeordnet ist.

8. Verwendung nach Anspruch 7,
**dadurch gekennzeichnet, dass**
das Heizelement (9) als elektrische Heizung ausgebildet ist und mit der von einem photovoltaischen Element (10, 11, 12) erzeugt Energie versorgt wird.

9. Verwendung nach Anspruch 7,
**dadurch gekennzeichnet, dass**
das Heizelement (9) mit Heizschlangen (9a) ausgebildet ist, die von dem von einem solarthermischen Element (10, 11, 12) erwärmten Wärmeträger wenigstens teilweise durchflossen werden.

10. Verwendung nach einem der vorhergehenden Ansprüche,
**dadurch gekennzeichnet, dass**
die Trägerteile (2) ein Sprinklerelement (13), zur Aufnahme einer Sprinklerflüssigkeit aufweisen, das in demjenigen Randbereich (11a,12a) eines Bauelements (11, 12) angeordnet ist, das einen größeren Abstand zur Montagfläche (3) aufweist als der gegenüberliegenden Randbereich (11b, 12b) dieses Bauelementes (11, 12).

11. Verwendung nach Anspruch 10,
**dadurch gekennzeichnet, dass**
die Sprinklerflüssigkeit mit der von den Bauelementen (10, 11, 12) erzeugten Energie erwärmt wird.

12. Verwendung nach einem der vorhergehenden Ansprüche,
**dadurch gekennzeichnet, dass**
die Trägerteile (2) als Hohlprofilschiene ausgebildet sind.

## Claims

1. Use of a fastening system (1) for flat plate-shaped components (10, 11, 12), with carrier parts (2) for fastening the plate-shaped components (10, 11, 12) to a pitched roof (4) with a mounting face (3), wherein at least two components (10, 11, 12) arranged adjacent to each other in the ridge-eaves direction are held by a plurality of carrier parts (2) fastened to the assembly face (3), wherein the carrier parts (2) are formed with a first support face (6) and a second support face (7) and, in order to hold adjacent edge areas (10b, 11a; 11b, 12a) of two components (10, 11, 12) arranged adjacent to each other in the ridge-eaves direction (FT), are mounted on the mounting face (3) in a state with angle[s] of inclination (β) larger in each case with respect to the angle of inclination (α) of the mounting face (3), so that - as viewed at a right angle to the mounting face (3) - an edge area (11a, 12a) of the component (11, 12) towards the eaves rests on the second support face (7) and is offset further away from the mounting face (3) with respect to the adjacent edge area (10b, 11b) of the component (10, 11) towards the ridge which rests on the first support face (6), wherein the adjacent edge areas of two components (10, 11, 12) arranged adjacent to each other are arranged in a manner free of overlapping.

2. Use according to claim 1, **characterized in that** the carrier parts (2) are formed with a covering element (5) for forming a snow catcher face (5a) in such a way that the snow catcher face (5a) forms a right angle or a slightly obtuse angle (γ) in the edge area (10b, 11b, 12b) of the component (10, 11, 12) towards the ridge.

3. Use according to claim 1 or 2, **characterized in that** the first support face (6) is used to support the edge area (10b, 11b, 12b) of the component (10, 11, 12) towards the ridge and the second support face (7) to support the edge area (11a, 12a) of the component (11, 12) towards the eaves, wherein in order to form the offset of the adjacent edge areas (10b, 11a; 11b, 12a) the perpendicular distance (a₁) of the first support face (6) from the mounting face (3) is smaller than the perpendicular distance (a₂) between the second support face (7) and the mounting face (3).

4. Use according to claim 3, **characterized in that** the carrier parts (2) are formed with a wall element (8) extending substantially at a right angle to the mounting face (3) and transversely to the ridge direction, and the first and second support faces (6, 7) are formed on opposite sides of the wall element (8).

5. Use according to one of claims 3 or 4, **characterized in that** in the region of the first support face (6) the carrier parts (2) are profiled in a U shape in order to enclose on the edge the edge area (10b, 11b, 12b) of the component (10, 11, 12) towards the ridge.

6. Use according to any one of claims 3 to 5, **characterized in that** in the region of the second support face (7) the carrier parts (2) are profiled in a U shape in order to enclose on the edge the edge area (11a, 12a) of the component (11, 12) towards the eaves.

7. Use according to any one of the preceding claims, **characterized in that** the carrier parts (2) have a heating element (9) which is arranged in the region of the snow catcher face (5a).

8. Use according to claim 7, **characterized in that** the heating element (9) is designed in the form of an electrical heating means and is supplied with the energy produced by a photovoltaic element (10, 11, 12).

9. Use according to claim 7, **characterized in that** the heating element (9) is formed with heating coils (9a) through which the heat carrier heated by a solar thermal element (10, 11, 12) flows at least in part.

10. Use according to any one of the preceding claims, **characterized in that** the carrier parts (2) have a sprinkler element (13) for receiving a sprinkler liquid, which is arranged **in that** edge area (11a, 12a) of a component (11, 12) which is at a greater distance from the mounting face (3) than the opposite edge area (11b, 12b) of this component (11, 12).

11. Use according to claim 10, **characterized in that** the sprinkler liquid is heated with the energy produced by the components (10, 11, 12).

12. Use according to any one of the preceding claims, **characterized in that** the carrier parts (2) are designed in the form of a hollow-profile rail.

## Revendications

1. Utilisation d'un système de fixation (1) d'éléments de construction en forme de plaque plats (10, 11, 12) avec des éléments supports (2) pour permettre de fixer les éléments de construction en forme de plaque (10, 11, 12) sur un toit en pente (4) ayant une surface de montage (3), selon laquelle au moins deux éléments de construction (10, 11, 12) alignés dans la direction faite-gouttière sont maintenus par plusieurs éléments supports (2) fixés sur la surface de montage (3), selon laquelle les éléments supports (2) sont réalisés avec une première surface d'appui (6) et une seconde surface d'appui (7), et pour permettre de maintenir des zones de bord voisines (10b, 11a, 11b, 12a) de deux éléments de construction (10, 11, 12) alignés dans la direction faite-gouttière (FT), sont montés sur la surface de montage (3) dans un état avec respectivement des angles d'inclinaison (β) supérieurs à l'angle d'inclinaison (α) de la surface de montage (3), de sorte que - considérée perpendiculairement à la surface de montage (3) - une zone de bord (11a, 12b) de l'élément de construction (11, 12) situé côté gouttière repose sur la seconde surface d'appui (7) et, soit plus décalé de la surface de montage (3) par rapport à la zone de bord (10b, 11b) voisine de l'élément de construction (10, 11) situé côté faite, qui repose sur la première surface d'appui (6), les zones de bord voisines de deux éléments de construction (10, 11, 12) alignées étant positionnées sans chevauchement.

2. Utilisation conforme à la revendication 1,
**caractérisée en ce que**
les éléments supports (2) sont réalisés avec un élément de recouvrement (5) pour former une surface de réception de neige (5a) de sorte que cette surface de réception de neige (5a) forme, dans la zone de bord (10b, 11 b, 12b) de l'élément de construction (10, 11, 12) situé côté faite un angle droit ou un angle légèrement tronqué (Y).

3. Utilisation conforme à la revendication 1 ou 2,
**caractérisée en ce que**
la première surface d'appui (6) sert au support de la zone de bord (10b, 11b, 12b) de l'élément de construction (10, 11, 12) situé côté faite et la seconde surface d'appui (7) sert au support de la zone de bord (11a, 12a) de l'élément de construction (11, 12) situé côté gouttière, pour permettre de former le décalage des zones de bord voisines (10b, 11a, 11b, 12a) la distance verticale (a1) de la première surface d'appui (6) par rapport à la surface de montage (3) étant inférieure à la distance verticale (a2) entre la seconde surface d'appui (7) et la surface de montage (3).

4. Utilisation conforme à la revendication 3,
**caractérisée en ce que**
les éléments supports (2) sont réalisés avec un élément de paroi (8) s'étendant essentiellement perpendiculairement à la surface de montage (3) et transversalement à la direction du faite, et la première et la seconde surface d'appui (6, 7) sont formées sur des côtés opposés de l'élément de paroi (8).

5. Utilisation conforme à l'une des revendications 3 ou 4,
**caractérisée en ce que**
les éléments supports (2) sont profilés, dans la zone de la première surface d'appui (6) en forme de U pour permettre d'entourer côté bord la zone de bord (10b, 11b, 12b) située côté faite de l'élément de construction (10, 11, 12).

6. Utilisation conforme à l'une des revendications 3 à 5,
**caractérisée en ce que**
les éléments supports (2) sont profilés dans la zone de la seconde surface d'appui (7) en forme de U pour permettre d'entourer côté bord la zone de bord (11a, 12a) située côté gouttière de l'élément de construction (11, 12).

7. Utilisation conforme à l'une des revendications précédentes,
**caractérisée en ce que**
les éléments supports (2) comportent un élément chauffant (9) qui est situé dans la zone de la surface de réception de neige (5a).

8. Utilisation conforme à la revendication 7,
**caractérisée en ce que**
l'élément chauffant (9) est réalisé sous la forme d'un chauffage électrique et est alimenté par l'énergie produite par un élément photovoltaïque (10, 11, 12).

9. Utilisation conforme à la revendication 7,
**caractérisée en ce que**
l'élément chauffant (9) est réalisé avec des serpentins chauffant (9a) qui sont parcourus au moins partiellement par l'agent caloporteur chauffé par un élément thermique solaire (10, 11, 12).

10. Utilisation conforme à l'une des revendications précédentes,
**caractérisée en ce que**
les éléments supports (2) comportent un élément d'extinction (13) permettant de recevoir un liquide extincteur qui est situé dans la zone de bord (11a, 12a) d'un élément de construction (11, 12) qui présente une plus grande distance par rapport à la surface de montage (3) que la zone de bord opposée (11b, 12b) de cet élément de construction (11, 12).

11. Utilisation conforme à la revendication 10,
**caractérisée en ce que**
le liquide extincteur est chauffé par l'énergie produite par les éléments de construction (10, 11, 12).

12. Utilisation conforme à l'une des revendications précédentes,
**caractérisée en ce que**
les éléments supports (2) sont réalisés sous la forme de rails profilés creux.
